# EUROPÄISCHE PATENTANMELDUNG

(11) **EP 3 366 098 A1**
(43) Veröffentlichungstag der Anmeldung: **29.08.2018**
(21) Anmeldenummer: 18155051.8
(22) Anmeldetag: 05.02.2018
(51) Int. Cl.: A01C 7/04, A01C 7/10, A01C 7/08

(54) **VERFAHREN UND STEUERUNGSSYSTEM FÜR EINE LANDWIRTSCHAFTLICHE VERTEILMASCHINE ZUM DOSIEREN UND AUSBRINGEN VON GRANULATARTIGEM VERTEILGUT**

(30) Priorität: 22.02.2017 DE 102017103640
(71) Anmelder: Horsch Maschinen GmbH, 92421 Schwandorf (DE)
(72) Erfinder: HORSCH, Philipp, 92421 Schwandorf (DE)
(74) Vertreter: Benninger, Johannes

(57) **Zusammenfassung**

Es sind ein System und ein Verfahren zur Steuerung einer landwirtschaftlichen Verteilmaschine zur Verteilung von granulatartigem Verteilgut wie Saatgut, Dünger oder dergl. offenbart. Zur Durchführung des Verfahrens ist wenigstens eine Dosiereinheit vorgesehen, die mittels rotatorischem Antrieb aus einem Speicherbehälter bzw. einem Saatgutbehälter granulatartiges Verteilgut wie Saatgut, Dünger oder dergl. auf volumetrische Weise in einen Luftvolumenstrom dosiert, wobei die Menge an Verteilgut, das in den Luftvolumenstrom dosiert wird, mittels einer Variation einer Rotationsdrehzahl der Dosiereinheit variiert werden kann. Mittels des Luftvolumenstroms wird das körnige Verteilgut von der wenigstens einen auf den Speicherbehälter zugreifenden bzw. mit dessen unterem Bereich gekoppelten Dosiereinheit über eine Leitungsverbindung und wenigstens eine Verteilstelle zu einer Mehrzahl von Saatleitungen befördert, die jeweils in Vereinzelungseinheiten der landwirtschaftlichen Verteilmaschine münden. Weiterhin ist ein Vereinzeln des jeweils in den Saatleitungen beförderten körnigen Verteilgutes vor der Abgabe in den Boden mittels der jeweils stromabwärts der Verteilstelle innerhalb der jeweiligen Saatleitungen angeordneten Vereinzelungseinheiten vorgesehen.

In Abhängigkeit von einer Anzahl an vorhandenen Öffnungen oder Kammern oder Finger sowie der variabel steuerbaren und veränderlichen Drehzahl der rotierenden Vereinzelungsorgane der jeweiligen Vereinzelungseinheiten wird eine Anzahl von je Flächeneinheit ausgebrachten Körnern ermittelt.

## Beschreibung

Die vorliegende Erfindung betrifft ein Verfahren zur Steuerung einer landwirtschaftlichen Verteilmaschine zur Verteilung von granulatartigem Verteilgut wie Saatgut, Dünger oder dergl. mit den Merkmalen des Oberbegriffs des unabhängigen Verfahrensanspruchs 1. Die Erfindung betrifft außerdem ein Steuerungssystem gemäß Anspruch 7 für eine landwirtschaftliche Verteilmaschine, die zur Verteilung von granulatartigem Verteilgut wie Saatgut, Dünger oder dergl. vorgesehen und ausgestattet ist.

In der Landwirtschaft besteht vielfältiger Bedarf, körniges Gut dosiert auszubringen. Zu diesem Zweck werden insbesondere Verteilmaschinen wie Sämaschinen und Düngerstreuer eingesetzt, die mit mechanischen oder mit pneumatischen Dosiersystemen ausgestattet sein können.

Aus dem Stand der Technik ist es bekannt, das in einem Sammelgutbehälter befindliche körnige Gut über Zellenradschleusen zu entnehmen. Das mittels der jeweiligen Zellenradschleuse dosierte körnige Gut wird anschließend von einem Luftstrom getragen, nachfolgend vereinzelt und über Dünger- oder Säschare ausgebracht. Im Interesse einer exakten Dosierung über die Fläche ist es wünschenswert, bei einer Feldfahrt eine definierte Anzahl an Körnern pro Fläche auszubringen, was in der Regel über einen Wert in der Einheit "Masse (an Verteilgut) pro Fläche" (z.B. kg/ha) vorgegeben und/oder reguliert wird. In regelmäßigen Abständen oder bei einem Verteilgut- oder Saatgutwechsel ist zur Kalibrierung des Systems eine sogenannte Abdrehprobe erforderlich. Hierzu wird zunächst über einen unbestimmten Zeitraum die jeweils pro Umdrehung der Zellenradschleuse dosierte Anzahl an Körnern ermittelt, anschließend gewogen und als sogenannter Abdrehfaktor in einer Rechnereinheit hinterlegt. Die Rechnereinheit umfasst normalerweise diverse Algorithmen, mittels derer unter Berücksichtigung des zuvor ermittelten Abdrehfaktors die Zellenradschleuse zum exakten Dosieren des körnigen Gutes entsprechend eines voreingestellten Zielwertes angesteuert werden kann.

Nachteilig an einer derartigen Steuerung oder Regelung unter Zuhilfenahme einer Abdrehprobe ist insbesondere, dass diese naturgemäß relativ zeitaufwändig ist, zur genauen Regelung wiederholt durchgeführt werden muss und zudem bei jedem Verteilgut- oder Saatgutwechsel erneut durchzuführen ist, ohne dass auf bereits zuvor ermittelte Werte zurückgegriffen werden kann. Zudem hat sich in der Praxis eine Regelung unter Zuhilfenahme der Abdrehprobe als relativ ungenau erwiesen, so dass sie heutigen Wünschen nach möglichst präziser Einstellung der Körnerdichte je überstrichener Fläche in vielen Fällen nicht mehr genügt.

Um diese Nachteile zu vermeiden, sind aus dem Stand der Technik bereits Entwicklungen bekannt, die das körnige Gut mittels eines sog. "Tausendkorngewichts" dosieren. Abdrehproben sind bei diesen Lösungen nicht mehr erforderlich.

So offenbart die EP 2 932 818 A1 eine Verteilvorrichtung und ein Verfahren zum Ausbringen von granulatartigem Verteilgut. Im Bereich der Verteileinheit ist eine Sensoreinheit zur quantitativen Erfassung weitgehend aller im Luftstrom bzw. im Teilstrom getragenen Körner des Verteilguts vorgesehen, wodurch auf das Verhältnis Körner pro Quadratmeter geschlossen werden kann. Die Sensoreinheit ist signaltechnisch mit einer Einrichtung zur Variation eines Trägerluftstroms und/oder eines Kornvolumenstroms im Bereich der Verteileinheit und/oder den dieser nachgeordneten Verbindungsleitungen gekoppelt.

Eine weitere derartige Vorrichtung ist durch die EP 1 772 048 A1 offenbart. Bei dieser bekannten Vorrichtung werden die Körner mit optischen Sensoren gezählt, indem die zu zählenden Körner einen mit optischen Sensoren besetzten und in einer Förderleitung angeordneten Messraum passieren. Die Körner unterbrechen einen Strahlengang zwischen einem Lichtemitter und einem Lichtdetektor der Sensoren, so dass sie auch als Ausführungsvarianten eines Lichtschrankenprinzips angesehen werden können.

Solche Systeme bedürfen jedoch einer Vielzahl von optisch arbeitenden Sensoren, welche in der Regel verschleiß- und schmutzanfällig sind und aufgrund der unvermeidlichen Staubbelastung der Körnerströme einen relativ hohen Wartungsaufwand mit sich bringen, sollen sie auf Dauer die angestrebte Erfassungsgüte liefern.

Angesichts der festgestellten Nachteile und Einschränkungen der bisher bekannten Systeme kann es daher als eine der vorrangigen Aufgaben der vorliegenden Erfindung angesehen werden, ein System und ein Verfahren zum Dosieren und Ausbringen von körnigem Gut zur Verfügung zu stellen, bei welchen die im Stand der Technik bekannten Nachteile zumindest teilweise überwunden werden können und die Abgabegenauigkeit von körnigem Gut verbessert wird. Das System soll hierbei einen unkomplizierten Aufbau besitzen. Zudem soll das Verfahren einfach umgesetzt werden können, ohne dass ein hoher Erfassungs- und Messaufwand sowie ein hoher Justierungsaufwand zur Inbetriebnahme und/oder im laufenden Betrieb erforderlich sind.

Diese Aufgaben werden durch ein Verfahren zur Steuerung einer landwirtschaftlichen Verteilmaschine zur Verteilung von granulatartigem Verteilgut wie Saatgut, Dünger oder dergl. mit den Merkmalen des unabhängigen Anspruch 1 und durch ein Steuerungssystem für eine landwirtschaftliche Verteilmaschine, die zur Verteilung von granulatartigem Verteilgut wie Saatgut, Dünger oder dergl. vorgesehen und ausgestattet ist, mit den Merkmalen des unabhängigen Anspruchs 7 gelöst. Weitere vorteilhafte Ausgestaltungen und Weiterbildungen der Erfindung sind in den jeweiligen abhängigen Ansprüchen beschrieben.

Zur Lösung der genannten Aufgaben schlägt die Erfindung ein Verfahren zur Steuerung einer landwirtschaftlichen Verteilmaschine zur Verteilung von granulatartigem Verteilgut wie Saatgut, Dünger oder dergl. vor. Das granulatartige oder körnige Gut, welches durch das erfindungsgemäße Verfahren ausgebracht werden kann, ist beispielsweise durch Samenkörner und/oder Dünger gebildet. Das erfindungsgemäße Verfahren umfasst zumindest die nachfolgend näher erläuterten Verfahrensschritte. Zur Durchführung des Verfahrens ist wenigstens eine Dosiereinheit vorgesehen, die mittels rotatorischen Antriebes aus einem Speicherbehälter bzw. einem Saatgutbehälter granulatartiges Verteilgut wie Saatgut, Dünger oder dergl. auf volumetrische Weise in einen Luftvolumenstrom dosiert, wobei die Menge an Verteilgut, das in den Luftvolumenstrom dosiert wird, mittels einer Variation einer Rotationsdrehzahl der Dosiereinheit variiert werden kann.

Mittels des Luftvolumenstroms wird das körnige Verteilgut von der wenigstens einen auf den Speicherbehälter zugreifenden bzw. mit dessen unterem Bereich gekoppelten Dosiereinheit über eine Leitungsverbindung und wenigstens eine geeignete Verteilstelle oder Verzweigungsstelle wie bspw. einen Verteilerturm oder ein an die Dosiereinheit anschließendes Verteilstück zu einer Mehrzahl von Saatleitungen befördert, die jeweils in Vereinzelungseinheiten der landwirtschaftlichen Verteilmaschine münden. Hierbei ist vorgesehen, dass der über die Leitungsverbindung mit der Dosiereinheit gekoppelte Verteilerturm bzw. in allgemeinerer Ausführungsform die über die Leitungsverbindung mit der Dosiereinheit gekoppelte Verteil- oder Verzweigungsstelle den wenigstens einen Verteilgut-Luftvolumenstrom in eine der Anzahl der Saatleitungen entsprechende Anzahl von Verteilgut-Luftvolumenströmen aufteilt. Weiterhin ist ein Vereinzeln des jeweils in den Saatleitungen beförderten körnigen Verteilgutes vor der Abgabe in den Boden mittels der jeweils stromabwärts der Verteilstelle, der Verzweigungsstelle oder des Verteilerturms innerhalb der jeweiligen Saatleitungen angeordneten Vereinzelungseinheiten vorgesehen. Mit dem verwendeten Begriff einer stromabwärts der Verteilstelle, der Verzweigungsstelle oder des Verteilerturms innerhalb der jeweiligen Saatleitungen angeordneten Vereinzelungseinheiten ist eine Richtung gemeint, bei der die Vereinzelungseinheiten in Förderrichtung des Verteilgutes und/oder in Strömungsrichtung des Luftvolumenstroms hinter der Verteilstelle, der Verzweigungsstelle oder dem Verteilerturms angeordnet sind. Jede dieser Vereinzelungseinheiten weist ein Gehäuse und ein darin rotierendes Vereinzelungsorgan mit Öffnungen oder Kammern zur Aufnahme jeweils einzelner Körner des Verteilgutes auf. Mit Hilfe und durch Unterstützung dieser Vereinzelungseinheiten erfolgt anschließend die vereinzelte Abgabe des körnigen Verteilgutes in den Boden mittels jeweils stromabwärts der Vereinzelungseinheiten angeordneter Ausbringschare, in welche die jeweiligen, mit den Vereinzelungseinheiten ausgestatteten Saatleitungen münden. Auch hierbei meint der verwendete Begriff der stromabwärts der Vereinzelungseinheiten angeordneten Ausbringschare wiederum eine Anordnung, bei der die Ausbringschare in Förderrichtung des Verteilgutes und/oder in Strömungsrichtung des Luftvolumenstroms hinter den Vereinzelungseinheiten bzw. diesen nachgeordnet angeordnet sind.

Das Verfahren sieht weiterhin vor, dass in Abhängigkeit von einer Anzahl an vorhandenen Öffnungen oder Kammern sowie der variabel steuerbaren und veränderlichen Drehzahl der rotierenden Vereinzelungsorgane der jeweiligen Vereinzelungseinheiten eine Anzahl von je Flächeneinheit ausgebrachten Körnern ermittelt wird. Die Besonderheit dieses erfindungsgemäßen Verfahrens liegt somit darin, dass die ausgebrachten Körner nicht direkt erfasst werden, was aufgrund der im bekannten Stand der Technik eingesetzten Sensorik zwar möglich wäre, aber sich als relativ aufwendig und fehlerträchtig erwiesen hat. Es wird beim vorliegenden Verfahren vielmehr auf Basis der bekannten Maschinenparameter ein sehr genauer Wert für die insgesamt innerhalb einer definierten Zeit ausgebrachten Körner errechnet, was aufgrund der bekannten Drehzahlen der Vereinzelungsorgane der Vereinzelungseinheiten sowie der bekannten Geometrien hinsichtlich der über den Umfang verteilten Öffnungen oder Kammern problemlos möglich ist. Aus der Anzahl der Öffnungen oder Kammern und der jeweils verwendeten Umdrehungszahlen der rotierenden Vereinzelungsorgane und aus der Anzahl der Säschare (oder Ausbringschare oder sonstige Ausbringelemente) sowie deren Abstände voreinander (Reihenweiten) und unter zusätzlicher Berücksichtigung der aktuell gefahrenen Geschwindigkeiten kann unmittelbar auf die je Flächeneinheit ausgebrachten Körner geschlossen bzw. diese je Flächeneinheit (z.B. je Hektar) ausgebrachten Körner vergleichsweise genau berechnet werden.

Eine sinnvolle Ausführungsvariante des erfindungsgemäßen Verfahrens kann vorsehen, dass auf der Basis bzw. in Abhängigkeit von der ermittelten Anzahl und/oder in Abhängigkeit von einer jeweils vorgegebenen Anzahl an je Flächeneinheit auszubringenden Körnern schließlich die Drehzahl der wenigstens einen Dosiereinheit variiert, d.h. verringert oder erhöht werden kann, wobei - zwar nicht notwendigerweise, aber bevorzugt - zusätzlich die jeweilige Fahrgeschwindigkeit - ob konstant oder variabel - mit berücksichtigt wird, da ansonsten die jeweiligen Werte für die je Flächeneinheit auszubringenden Körner möglicherweise nicht ausreichend genau eingehalten werden können.

Bei einer Variante des erfindungsgemäßen Verfahrens kann die landwirtschaftliche Verteilmaschine mit einer Mehrzahl an Vereinzelungseinheiten ausgestattet sein, deren Anzahl der von der Verteileinrichtung bzw. vom Verteilerturm mündenden Anzahl an Saatleitungen entspricht, wobei im Gehäuse jeder Vereinzelungseinheit ein Öffnungen oder Kammern aufweisendes Vereinzelungsorgan rotiert. Außerdem kann vorzugsweise vorgesehen sein, dass jeweils in Abhängigkeit von der Drehzahl des im Gehäuse der Vereinzelungseinheit rotierenden Vereinzelungsorgans und dessen Anzahl an Öffnungen oder Kammern zur vereinzelten Aufnahme von Körnern eine Gesamtzahl an je Flächeneinheit ausgebrachten Körnern ermittelt wird, wobei zudem in Abhängigkeit von dieser Gesamtzahl an ausgebrachten Körnern sowie entsprechend einer Vorgabe an je Flächeneinheit auszubringenden Körnern eine Drehzahl der mindestens einen Dosiereinheit variiert, d.h. bedarfsweise verringert oder erhöht wird.

Weiterhin kann das Verfahren vorsehen, dass in Abhängigkeit von der Anzahl an Vereinzelungseinheiten mit jeweils darin rotierenden Vereinzelungsorganen sowie in Abhängigkeit von der Drehzahl und der Anzahl an Öffnungen oder Kammern zur vereinzelten Aufnahme von Körnern der Anzahl der rotierenden Vereinzelungsorgane eine Gesamtzahl an je Flächeneinheit ausgebrachten Körnern ermittelt wird, wobei diese Gesamtzahl mittels einer elektronischen Rechner- und Steuereinheit in eine je Quadratmeter ausgebrachte Anzahl von Körner umgerechnet wird.

Bei dem Verfahren kann zudem vorgesehen sein, dass eine Auswertung der je Zeiteinheit mit Körnern gefüllten Öffnungen oder Kammern der rotierenden Vereinzelungsorgane zusätzlich auf Basis eines ermittelten Füllstandes der jeweiligen Vereinzelungseinheiten erfolgt. Damit ist ein weiterer wichtiger Aspekt einer Variante des erfindungsgemäßen Verfahrens genannt, denn jede Öffnung des rotierenden Vereinzelungsorgans sollte mit einem Korn gefüllt sein, wobei zusätzlich Füllstandssensoren im Gehäuse der Vereinzelungseinheiten zur Erfassung eines aktuellen und/oder schwankenden Füllstandes vorhanden sein können. Solange der Füllstand über den Zeitverlauf schwankt, ist sichergestellt, dass sowohl Körner zugeführt als auch abgegeben werden. Bei dem Verfahren kann der Füllstand der jeweiligen Vereinzelungseinheiten wahlweise mittels eines Füllstandsensors und/oder mittels einer Drehmomenterfassung am Antriebsmotor der Vereinzelungseinheit erfasst werden.

Um eine für die Praxis brauchbare Voreinstellung der Dosiereinheit zu erreichen, könnte auch eine Abdrehprobe oder eine Kalibrierfahrt vorgenommen werden, um dadurch eine möglichst schnelle Anpassung des durch die Dosiereinheit geförderten granulatartigen Verteilgutes zu erreichen, wobei dies jedoch keinesfalls zwingend erforderlich ist. Darüber hinaus kann ebenso eine Vorauswahl des innerhalb der Dosiereinheit rotierenden Dosierelementes getroffen werden, wobei eine solche Vorauswahl insbesondere auch das zu verteilende granulatartige Verteilgut zu berücksichtigen hat.

Zur Lösung der oben genannten Aufgaben schlägt die Erfindung weiterhin ein Steuerungssystem für eine landwirtschaftliche Verteilmaschine mit den Merkmalen des unabhängigen Anspruchs 7 vor, wobei die Verteilmaschine zur Verteilung von granulatartigem Verteilgut wie Saatgut, Dünger oder dergl. vorgesehen und ausgestattet ist. Das körnige oder granulatartige Gut, welches mittels des Systems ausgebracht werden kann, ist beispielsweise durch Samenkörner und/oder Dünger gebildet. Das System umfasst einen Speicher für das körnige Gut, in welchem das körnige Gut gelagert wird. Das Steuerungssystem umfasst wenigstens eine Dosiereinheit, die mittels rotatorisch angetriebenem Dosierelement granulatartiges Verteilgut aus einem Vorratsbehälter wie bspw. einem Saatgutbehälter volumetrisch in einen Luftvolumenstrom dosiert, wobei die Menge an Verteilgut, das in den Luftvolumenstrom dosiert wird, mittels einer Variation einer Rotationsdrehzahl der Dosiereinheit variierbar ist.

Zudem umfasst die landwirtschaftliche Verteilmaschine, die mit dem erfindungsgemäßen Steuerungssystem ausgestattet ist, wenigstens eine stromabwärts der wenigstens einen Dosiereinheit angeordnete und mit dieser in fluidischer Verbindung stehende und den Luftvolumenstrom mit dem körnigen Verteilgut aufnehmende geeignete Verteilstelle oder Verzweigungsstelle, gebildet bspw. durch einen Verteilerturm oder ein an die Dosiereinheit anschließendes Verteilstück o dgl., mit einer Mehrzahl von daran angeschlossenen Saatleitungen, die jeweils in Vereinzelungseinheiten der landwirtschaftlichen Verteilmaschine münden, wobei die Verteil- oder Verzweigungsstelle bzw. der Verteilerturm den wenigstens einen Verteilgut-Luftvolumenstrom in eine der Anzahl der Saatleitungen entsprechende Anzahl von Verteilgut-Luftvolumenströmen aufteilt. Die Verteilmaschine weist zudem jeweils stromabwärts (in Förderrichtung des Verteilgutes und/oder in Strömungsrichtung des Luftvolumenstroms gesehen) der Verteil- oder Verzweigungsstelle bzw. des Verteilerturms innerhalb der jeweiligen Saatleitungen angeordnete Vereinzelungseinheiten auf, die jeweils ein Gehäuse und ein darin rotierendes Vereinzelungsorgan mit Öffnungen oder Kammern zur Aufnahme jeweils einzelner Körner des Verteilgutes aufweisen, wobei die Vereinzelungseinheiten zum Vereinzeln des jeweils in den Saatleitungen beförderten körnigen Verteilgutes vor der Abgabe in den Boden vorgesehen und ausgestattet sind.

Die Vereinzelungseinheiten können auf verschiedenste Weise Körner entsprechend vereinzeln und bspw. nach dem Differenzdruckprinzip auf Basis von Über- oder Unterdruck, nach dem Fliehkraftprinzip, mechanisch oder wahlweise auch nach dem sog. Blasspülverfahren (vgl. etwa DE 2 064 336 C) arbeiten. Generell sind hierbei jegliche für eine Kornvereinzelung bekannten Systeme einsetzbar, bei welchen jeweils Vereinzelungsorgane Verwendung finden, mittels derer eine jeweilige definierte Anzahl an Öffnungen oder Kammern vorhanden sind. Darüber hinaus sei noch darauf hingewiesen, dass auch sog. Fingerpickup-Systeme, bei welchen jeweils über mechanische Elemente jeweils ein Korn aufgenommen wird, Verwendung finden können. Bei derartigen Ausführungsformen sind die Öffnungen oder Kammern durch mechanische Elemente (Finger) ersetzt.

Außerdem umfasst die Verteilmaschine mindestens eine elektronische Rechner- und Steuereinheit, die zur Ermittlung einer Anzahl von je Flächeneinheit ausgebrachten Körnern in Abhängigkeit von einer Anzahl an Öffnungen oder Kammern sowie der variablen Drehzahl der rotierenden Vereinzelungsorgane der jeweiligen Vereinzelungseinheiten vorgesehen und ausgestattet ist, und jeweils stromabwärts (in Förderrichtung des Verteilgutes und/oder in Strömungsrichtung des Luftvolumenstroms gesehen) der Vereinzelungseinheiten angeordnete Ausbringschare zur vereinzelten Abgabe des körnigen Verteilgutes in den Boden, in welche die jeweiligen, mit den Vereinzelungseinheiten ausgestatteten Saatleitungen münden. Bei dem Steuerungssystem ist vorgesehen, dass durch Vorgabe der elektronischen Rechner- und Steuereinheit eine Drehzahl der wenigstens einen Dosiereinheit in Abhängigkeit von einer jeweils vorgegebenen Anzahl an je Flächeneinheit auszubringenden Körnern variierbar, d.h. verringerbar oder erhöhbar ist. Bei bekannter Anzahl der Öffnungen oder Kammern des mit bekannter Drehzahl rotierenden Vereinzelungsorgans, bei bekannter Anzahl der Ausbringschare der Maschine und deren Abstand voneinander (Reihenweite) und bei Berücksichtigung der aktuellen Fahrgeschwindigkeit der Verteilmaschine kann mit Hilfe der Rechner- und Steuereinheit sehr genau die je Flächeneinheit ausgebrachte Menge an Körnern ermittelt werden, was problemlos auf eine vorgegebene Flächeneinheit (z.B. Hektar) umgerechnet werden kann. Auf diese Weise ermöglicht es das erfindungsgemäße Steuerungssystem, die auszubringende Körnermenge ohne aufwendige Sensorik direkt aus den bekannten Maschinenparametern zu ermitteln und ständig entsprechend der jeweiligen Vorgaben zu beeinflussen, was eine insgesamt sehr robuste und zuverlässige Steuerungsmöglichkeit für die je Flächeneinheit auszubringende Körnermenge liefert.

Bei einer Variante des erfindungsgemäßen Steuerungssystems kann die landwirtschaftliche Verteilmaschine mit einer Mehrzahl an Vereinzelungseinheiten ausgestattet sein, deren Anzahl der von der Verteil- oder Verzweigungsstelle bzw. vom Verteilerturm mündenden Anzahl an Saatleitungen entspricht, wobei im Gehäuse jeder Vereinzelungseinheit ein Öffnungen oder Kammern aufweisendes Vereinzelungsorgan rotiert, und wobei jeweils in Abhängigkeit von der Drehzahl des im Gehäuse der Vereinzelungseinheit rotierenden Vereinzelungsorgans und dessen Anzahl an Öffnungen oder Kammern zur vereinzelten Aufnahme von Körnern eine Gesamtzahl an je Flächeneinheit ausgebrachten Körnern ermittelbar ist, und wobei in Abhängigkeit dieser Gesamtzahl an ausgebrachten Körnern sowie entsprechend einer Vorgabe an je Flächeneinheit auszubringenden Körnern eine Drehzahl der mindestens einen Dosiereinheit variierbar (verringert oder erhöht) ist.

Bei dem Steuerungssystem kann zudem vorgesehen sein, dass in Abhängigkeit von der Anzahl an Vereinzelungseinheiten mit jeweils darin rotierenden Vereinzelungsorganen sowie in Abhängigkeit von der Drehzahl und der Anzahl an Öffnungen oder Kammern zur vereinzelten Aufnahme von Körnern der Anzahl der rotierenden Vereinzelungsorgane eine Gesamtzahl an je Flächeneinheit ausgebrachten Körnern ermittelbar ist, und wobei diese Gesamtzahl mittels der elektronischen Rechner- und Steuereinheit in eine je Quadratmeter ausgebrachte Anzahl von Körner umrechenbar ist.

Die elektronische Rechner- und Steuereinheit kann insbesondere zur Auswertung der je Zeiteinheit mit Körnern gefüllten Öffnungen oder Kammern der rotierenden Vereinzelungsorgane auf Basis eines ermittelten Füllstandes der jeweiligen Vereinzelungseinheiten vorgesehen und ausgestattet sein. Normalerweise ist bei den rotierenden Vereinzelungsorganen jede Öffnung oder Kammer mit einem einzelnen Korn gefüllt. Der Füllgrad innerhalb des Gehäuses der jeweiligen Vereinzelungseinheit kann zusätzlich gemessen werden, insbesondere mittels einer geeigneten Füllstandssensorik, die normalerweise innerhalb des Gehäuses der jeweiligen Vereinzelungseinheiten angeordnet ist. Bei schwankendem Füllstand ist ersichtlich, dass sowohl Körner abgegeben werden als auch ständig zugeführt werden, was auf eine ordnungsgemäß funktionierende Vereinzelungseinheit schließen lässt. Das Steuerungssystem kann insbesondere einen Füllstandssensor zur Erfassung der Füllstände der jeweiligen Vereinzelungseinheiten und/oder eine Drehmomenterfassung am Antriebsmotor zur Erfassung der Füllstände der jeweiligen Vereinzelungseinheiten umfassen, die jeweils gekoppelt sind mit der elektronischen Rechner- und Steuereinheit.

Es sei an dieser Stelle darauf hingewiesen, dass sich alle Aspekte und Merkmale, die im Zusammenhang mit dem erfindungsgemäßen Verfahren genannt und erläutert wurden, gleichermaßen auf das erfindungsgemäße Steuerungssystem beziehen bzw. Teilaspekte dieses Steuerungssystems bilden können. In umgekehrter Weise gilt zudem, dass sich alle Aspekte und Merkmale, die im Zusammenhang mit dem erfindungsgemäßen Steuerungssystem genannt und erläutert wurden, gleichermaßen auf das erfindungsgemäße Verfahren beziehen bzw. Teilaspekte dieses Verfahrens bilden oder sein können.

Gemäß einem weiteren Aspekt der Erfindung kann das erfindungsgemäße System eine größere Anzahl von Vereinzelungseinheiten in den Saatleitungen zwischen der Verteil- oder Verzweigungsstelle bzw. dem Verteilerturm und den jeweiligen Ausbringscharen aufweisen, was eine typische Konfiguration für mehrreihige Sä- und/oder Düngermaschinen darstellt. In diesen Vereinzelungseinheiten rotieren jeweils die oben beschriebenen Vereinzelungsorgane, typischerweise innerhalb der Gehäuse, die mit einer kreisbogenförmigen Innenmantelfläche und einer tangential sich daran anschließenden und zumindest abschnittsweise leicht gekrümmt verlaufenden Ausgangsleitung ausgestattet sind, so dass der körnertragende Luftstrom entlang dieser Kontur geleitet wird.

Jede der Aufnahmen des rotierenden Vereinzelungsorgans kann zum Dosieren einer bestimmten Anzahl an Körner des körnigen Gutes im Hinblick auf eine vollständige Umdrehung des jeweiligen Organes oder wahlweise auch von mehreren Umdrehungen des jeweiligen Organes ausgebildet sein. In Abhängigkeit einer jeweiligen Anzahl an Aufnahmen können daher mehr bzw. weniger Körner vom jeweiligen Vereinzelungsorgan aufgenommen werden und damit mehr bzw. weniger Körner je vollständiger Umdrehung auf das Feld ausgebracht werden. Da die Körner im Hinblick auf ein verwendetes Saatgut unterschiedlich groß sind, kann die Größe von Aufnahmen bei den mindestens zwei Vereinzelungsorganen unterschiedlich ausgebildet sein. Danach kann für unterschiedliche Arten an körnigem Gut ein Vereinzelungsorgan mit bestimmten an die jeweilige Art des körnigen Gutes angepassten Aufnahmen zur Verfügung gestellt werden. Die Aufnahmen der mindestens zwei Vereinzelungsorgane können sich vorzugsweise am Randbereich des jeweiligen Vereinzelungsorgans befinden. Insbesondere kann jedes Vereinzelungsorgan eine Vielzahl im Hinblick auf eine Drehachse radial ausgerichteter bzw. positionierter Aufnahmen besitzen.

Das System weist weiter eine Steuerungseinrichtung (die oben bereits genannte Steuer- und Rechnereinheit) auf, die mit einem jeweiligen in die Einbauposition eingesetzter Vereinzelungseinheit sowie auch der Dosiereinrichtung in Verbindung steht und über welche eine Drehfrequenz bzw. Umdrehungsgeschwindigkeit eines jeweiligen in die Einbauposition eingesetzten Vereinzelungsorganes regelbar ist. Die Steuerungseinrichtung kann beispielsweise einen Aktor wie einen elektromotorischen Antrieb ansteuern, welcher das jeweilige Vereinzelungsorgan mit der bestimmten Drehfrequenz antreibt.

Die Steuerungseinrichtung ist zur Entgegennahme und/oder zum Feststellen von Informationen zu einer Anzahl an Aufnahmen des jeweiligen Vereinzelungsorgans ausgebildet. Weiter ist die Drehfrequenz des Vereinzelungsorgans über die Steuerungseinrichtung unter Berücksichtigung der Informationen selbständig regelbar.

Eine Stellgröße zur Regelung der Drehfrequenz des jeweiligen Vereinzelungsorgans stellt die Information zur Anzahl an Aufnahmen dar, welche in der Steuerungseinrichtung hinterlegt sein kann. Anhand der Informationen zur Anzahl an Aufnahmen des jeweiligen in die Einbauposition eingesetzten Organs kann die Steuerungseinrichtung mittels Algorithmen ggf. auf eine Ist-Anzahl an dosierten Körnern je Umdrehung des Vereinzelungsorgans schließen.

Anhand der bekannten Ist-Anzahl an dosierten Körnern je Umdrehung kann die Steuerungseinrichtung auf eine Soll-Drehfrequenz schließen, welche bei einer definierten Geschwindigkeit und/oder bei einer Kurvenfahrt des Fahrzeugs während einer Feldfahrt erforderlich ist, um eine gewünschte Ausbringmenge bzw. Soll-Anzahl an auszubringenden Körnern je Fläche zu erreichen.

Wird eine Geschwindigkeitsänderung durch einen Fahrzeugführer eingeleitet, so kann die Steuerungseinrichtung in denkbaren Ausführungsformen eine Änderung der Drehfrequenz bewirken, welche an die jeweilige Ist-Geschwindigkeit angepasst ist. Bei einer Geschwindigkeitserhöhung kann die Drehfrequenz entsprechend erhöht und bei einer Geschwindigkeitsreduzierung entsprechend reduziert werden.

Eine Übertragung der Information über die Anzahl der Aufnahmen kann insbesondere durch eine Entgegennahme in Form einer manuellen Eingabe und/oder durch ein automatisches Feststellen der Steuerungseinrichtung bei jeweiligem Einsetzen eines Dosierorgans in die Einbauposition erfolgen, d.h. in die Steuerungseinrichtung kann unmittelbar bzw. direkt die Anzahl an Aufnahmen des jeweiligen Vereinzelungsorgans eingegeben werden. Denkbar ist beispielsweise, dass die mindestens zwei Organe jeweils über einen RFID-Transponder verfügen, wobei die Steuerungseinrichtung den RFID-Transponder eines jeweiligen Vereinzelungsorgans auslesen kann und hierdurch Informationen zur Anzahl an Aufnahmen des jeweiligen Vereinzelungsorgans erhält.

Normalerweise ist vorgesehen, dass zwischen dem Speicher für körniges Gut und der Verteil- oder Verzweigungsstelle bzw. dem Verteilerturm mindestens ein Dosieraggregat vorgesehen ist, welches vorzugsweise als Zellenradschleuse ausgebildet ist. Die Zellenradschleuse kann vorzugsweise unmittelbar unter dem Speicher für körniges Gut angeordnet sein, so dass die Zellenradschleuse körniges Gut aus dem Speicher für körniges Gut mittels einer rotierenden Drehbewegung in eine nachfolgende Leitung dosieren kann. Die Zellenradschleuse kann gleichgroße Zellen, vorzugsweise vier oder mehr Zellen, umfassen, in welche Zellen jeweils körniges Gut aus dem Speicher für körniges Gut aufgenommen werden kann. Die Zellenradschleuse kann je nach Bedarf gegen eine Zellenradschleuse mit mehr oder weniger Zellen und/oder mit größeren oder kleineren Zellen ausgetauscht werden.

Zum Transport des körnigen Guts vom Dosieraggregat zu den Vereinzelungseinheiten können diverse Leitungen vorgesehen sein. Zur Unterstützung eines Transports kann ein Gebläse zur Erzeugung eines Luftstroms vorgesehen sein, welcher Luftstrom das körnige Gut in Richtung eines Austragungsorgans oder mehrerer Austragungsorgane und/oder in Richtung einer Vereinzelungseinheit trägt.

Es kann auch vorgesehen sein, dass die Steuerungseinrichtung zumindest eine elektrische Stromaufnahme eines elektrischen Antriebsmotors des jeweiligen in die Einbauposition eingesetzten Organs verarbeitet und in Abhängigkeit davon eine Drehfrequenz des Vereinzelungsorgans generiert. Damit kann die Drehfrequenz der Vereinzelungseinheit über die zumindest eine elektrische Stromaufnahme des jeweiligen Vereinzelungsorgans geregelt werden.

Gemäß einer Weiterbildung der Erfindung kann eine mit der Steuerungseinrichtung in Verbindung stehende Eingabeeinheit vorgesehen sein, über welche die Steuerungseinrichtung Informationen zu einer Anzahl an Aufnahmen des jeweiligen in die Einbauposition eingesetzten Vereinzelungsorgans entgegennehmen kann.

Über die Eingabeeinheit kann einem Bediener ein Tool zur Verfügung stehen, mittels dessen er jeweils die Anzahl an Aufnahmen des jeweils in die Einbauposition eingesetzten Vereinzelungsorgans eingeben kann, d.h. die Eingabe der Anzahl an Aufnahmen kann direkt bzw. unmittelbar über die Eingabeeinheit erfolgen. Die Eingabe der Anzahl an Aufnahmen kann jeweils bei einem Wechsel des Vereinzelungsorgans erfolgen, da die Vereinzelungsorgane jeweils über eine unterschiedliche Anzahl an Öffnungen verfügen und sich hierdurch in Abhängigkeit einer Umdrehungsfrequenz unterschiedliche Vereinzelungsrate ergibt. Die Eingabeeinheit zur Vorgabe der Anzahl an Aufnahmen des jeweiligen in die Einbauposition eingesetzten Vereinzelungsorgans kann als Touchscreen ausgebildet sein. Jegliche weitere Schnittstellen zur Eingabe von Informationen sind denkbar.

Gemäß einer Weiterbildung der Erfindung kann die Steuerungseinrichtung über die Eingabeeinheit Angaben zu einer auszubringenden Soll-Anzahl an Körnern in Abhängigkeit einer von dem System zurückgelegten Wegstrecke entgegennehmen, wobei die Drehfrequenz des Vereinzelungsorgans über die Steuerungseinrichtung unter Berücksichtigung der jeweils entgegengenommenen Angaben selbständig regelbar ist.

Neben der Information über die Anzahl an Aufnahmen des jeweiligen Vereinzelungsorgans kann als weitere Information über die Eingabeeinheit eine Soll-Anzahl an auszubringenden Körnern eingegeben werden, d.h. der Bediener kann eine gewünschte Ausbringmenge an Körnern je Flächeneinheit. festsetzen. Die Steuerungseinrichtung kann die Informationen über die Anzahl an Aufnahmen des jeweiligen Vereinzelungsorgans und die Informationen über die Soll-Anzahl an auszubringenden Körnern je Flächeneinheit anhand hinterlegter Algorithmen auswerten und hieraus die Drehfrequenz des jeweiligen Vereinzelungsorgans regeln. Je nach Fahrtgeschwindigkeit kann damit eine höhere bzw. eine niedrigere Drehfrequenz erforderlich sein, um die Soll-Anzahl an auszubringenden Körnern je Flächeneinheit zu erreichen. Bei einer hohen Fahrtgeschwindigkeit kann eine hohe Drehfrequenz des jeweiligen Vereinzelungsorgans erforderlich sein und umgekehrt, damit die Soll-Anzahl an auszubringenden Körnern während einer gesamten Feldfahrt erreicht wird. Sofern die Soll-Anzahl an auszubringenden Körnern je Flächeneinheit niedrig ist, kann die Drehfrequenz des jeweiligen Vereinzelungsorgans auch bei höheren Geschwindigkeiten nicht hoch sein. In der Regel kann die Soll-Anzahl an auszubringenden Körnern vor einer Feldfahrt durch einen Bediener vorgegeben werden. In vorstellbaren Ausführungsformen kann der Bediener die Soll-Anzahl auch während einer Feldfahrt ändern, was auch mit einer zumindest näherungsweise zeitgleichen Regelung der Drehfrequenz des jeweiligen Vereinzelungsorgans verbunden sein kann. Das Einhalten der Soll-Anzahl an auszubringenden Körnern kann unterstützt werden, indem die Steuerungseinrichtung zumindest eine elektrische Stromaufnahme eines elektrischen Antriebsmotors des jeweiligen Vereinzelungsorgans verarbeitet und daraus eine Drehfrequenz des Dosieraggregats generiert.

Gemäß einer Weiterbildung der Erfindung kann der Steuerungseinrichtung über die Eingabeeinheit ein Typ des jeweiligen Vereinzelungsorgans vorgegeben werden, wobei über die Steuerungseinrichtung mittels der Vorgabe des jeweiligen Typs eine jeweilige Anzahl an Aufnahmen des jeweiligen Vereinzelungsorgans feststellbar ist.

Statt der Eingabe von Informationen über die Anzahl an Aufnahmen kann durch den Bediener auch die Eingabe eines Typs des jeweiligen Vereinzelungsorgans erfolgen. Da mindestens zwei, vorzugsweise jedoch eine Vielzahl an unterschiedlichen Vereinzelungsorganen zur Auswahl stehen, können die verschiedenen Typen mitsamt der Anzahl an Aufnahmen in der Steuerungseinrichtung hinterlegt sein. Anhand der Eingabe bzw. Auswahl des jeweiligen Typs kann die Steuerungseinrichtung sodann ggf. auf die Anzahl an Aufnahmen schließen. Die Anzahl an Aufnahmen ist im Hinblick auf die Regelung der Drehfrequenz von wesentlicher Bedeutung, da über diese Information die Steuerungseinrichtung die Ist-Anzahl an dosierten Körnern je Umdrehung des jeweiligen Vereinzelungsorgans abgeleitet werden kann.

Denkbar wäre auch, dass die Steuerungseinrichtung über ein Gewicht bzw. eine Masse des jeweiligen Vereinzelungsorgans auf den entsprechenden Typ und damit auch auf die Anzahl an Aufnahmen schließen kann. Hierzu kann mindestens ein Sensor zur Erfassung des Gewichts im Bereich der Einbauposition positioniert sein. Die Steuerungseinrichtung kann das Gewicht nach Einsetzen des jeweiligen Vereinzelungsorgans in diesem Fall ggf. mittels des Sensors erfassen. In der Steuerungseinrichtung können Algorithmen hinterlegt sein, mittels welcher das erfasste Gewicht einem bestimmten Vereinzelungsorgan zugeordnet werden kann. Die Steuerungseinrichtung kann über die Zuordnung des jeweiligen Vereinzelungsorgans die Informationen generieren und hierüber auf eine jeweilige Anzahl an Aufnahmen des jeweiligen Vereinzelungsorgans schließen.

Das Verfahren kann vorsehen, dass zumindest eine elektrische Stromaufnahme des jeweiligen Vereinzelungsorgans verarbeitet und in Abhängigkeit davon eine Drehfrequenz der Vereinzelungseinheit generiert werden. Damit kann die Drehfrequenz der Vereinzelungseinheit über die zumindest eine elektrische Stromaufnahme des jeweiligen Vereinzelungsorgans geregelt werden.

Bei dem erfindungsgemäßen Verfahren wie auch beim erfindungsgemäßen Steuerungssystem können sich die jeweiligen Vereinzelungseinheiten wahlweise in unmittelbarer räumlicher Nähe zu den Ausbringelementen bzw. den Ausbringscharen oder Säscharen befinden und bspw. auf den jeweiligen Scharträgern montiert sein, so dass sie über die jeweiligen Leitungsverbindungen mit der mindestens einen zentralen Verteilstelle, Verzweigungsstelle oder mit dem mindestens einen zentralen Verteilerturm verbunden sind, wobei die Verteilstelle oder der Verteilerturm üblicherweise relativ nahe am zentralen Kornvorrat angeordnet bzw. ein baulich zumindest teilweise dort integriertes Element bildet. Ebenso möglich ist es jedoch, die Vereinzelungseinheiten entfernt von den Ausbringscharen bzw. Säscharen zu positionieren, bspw. in räumlicher Nähe zum Verteilerturm, zur Verteil- oder Verzweigungsstelle und damit ggf. auch in räumlicher Nähe zum zentralen Speicherbehälter oder Kornvorrat, so dass von den Vereinzelungseinheiten jeweils längere Saat- oder Kornleitungen zu den Ausbringelementen, Ausbringscharen oder Säscharen führen können. Darüber hinaus ist auch eine dritte Variante denkbar, bei der die Vereinzelungseinheiten weder nahe am Verteilerturm bzw. an der Verteilstelle noch in unmittelbarer Nähe zu den Ausbringscharen platziert, sondern jeweils über eingangs- und ausgangsseitige Leitungsverbindungen mit den zuführenden als auch mit den stromabwärts befindlichen Komponenten verbunden sind. Alle drei Varianten sind möglich und sinnvoll; alle drei Varianten sind gleichermaßen vom Erfindungsgedanken abgedeckt und von der Erfindung mitumfasst.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer Ausführungsform des erfindungsgemäßen Systems.
Fig. 2 zeigt ein schematisches Flussdiagramm zu einer sinnvollen Regelungsvariante des erfindungsgemäßen Systems.

Es sei darauf hingewiesen, dass die dargestellten Ausführungsformen lediglich Beispiele darstellen sollen, wie das erfindungsgemäße Steuerungssystem oder das erfindungsgemäße Verfahren ausgestaltet sein können und stellen keine abschließende Begrenzung dar.

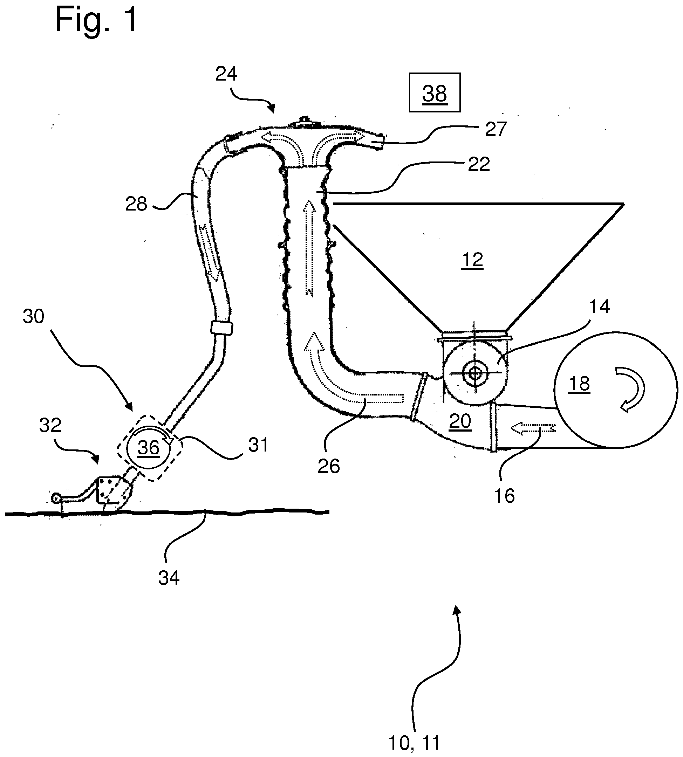

Die schematische Darstellung der Fig. 1 zeigt eine Ausführungsvariante des erfindungsgemäßen Systems 10, das im vorliegenden Zusammenhang auch als Steuerungssystem 10 bezeichnet wird. Beim System 10 kann es sich um eine landwirtschaftliche Verteilmaschine 11 bzw. um eine Sämaschine 11 oder um eine Düngerverteilmaschine zum Dosieren und zum Ausbringen von körnigem Gut handeln, bzw. das System bzw. Steuerungssystem 10 kann Teil dieser Sämaschine 11 sein. Das körnige Gut kann durch Saatgut, Dünger oder dergleichen gebildet sein. Das körnige Gut ist in einem Speicherbehälter 12 gelagert. Der Speicherbehälter 12 kann insbesondere eine trichterförmige Form aufweisen. Unterhalb des Speicherbehälters 12 ist eine Dosiereinheit 14 vorgesehen, die insbesondere ein rotierendes Dosierorgan (nicht gezeigt) aufweisen kann bzw. im Regelfall aufweist, das bspw. elektromotorisch mit variabler Drehzahl angetrieben ist, und das bspw. als Zellenradschleuse ausgebildet sein kann. So kann das Dosierorgan der Dosiereinheit 14 bspw. insgesamt vier gleichgroße Zellen (hier nicht dargestellt) aufweisen, die über den rotierenden Umfang verteilt sind und in welche das körnige Gut aus dem Speicherbehälter 12 aufgenommen werden kann. Es versteht sich von selbst, dass auch andere Unterteilungen möglich sind, bspw. in fünf, sechs oder mehr gleichgroße Zellen. Mittels der Dosiereinheit 14 werden die Körner einem Luftstrom 16 zudosiert, der von einem Gebläse 18 erzeugt wird, das bspw. durch ein Radialgebläse 18 gebildet sein kann. Der Luftstrom 16 mitsamt den darin befindlichen Körnern wird in einer Luftleitung 20 befördert. Durch das dosierte Einspeisen und/oder Dosieren von Körnern in den Luftstrom 16 wird ein körnertragender Luftstrom 26 gebildet, der das körnige Gut über ein Steigrohr 22 zu einem zentralen Verteilerturm 24 befördert. Der zentrale Verteilerturm 24 kann für eine gleichmäßige Verteilung des zugetragenen körnigen Guts in eine Vielzahl von Saatleitungen 28 sorgen.

Anstelle des gezeigten Verteilerturms 24 kann der zentrale Luftstrom 16 bzw. der körnertragende Luftstrom 26 grundsätzlich auch in eine anders gestaltete Verteil- und/oder Verzweigungsstelle (hier nicht dargestellt) münden, um in zahlreiche TeilLuftströme in den jeweiligen Saatleitungen 28 aufgeteilt zu werden. Wenn also im Zusammenhang mit der Beschreibung der Fig. 1 generell vom Verteilerturm 24 die Rede ist, so ist dies nicht einschränkend zu verstehen, sondern liefert dem Fachmann im Wesentlichen nur ein übliches Ausführungsbeispiel, von dem er jedoch an dieser Stelle problemlos abweichen kann, ohne damit vom Grundgedanken der Erfindung abzuweichen. Auch könnte als Verteil- und/oder Verzweigungsstelle ein an die Dosiereinheit anschließendes Verteilstück o. dgl. dienen, von welchem aus wiederum Saatleitungen 28 direkt die Vereinzelungseinheit 30 münden können.

Im Interesse einer besseren Übersicht sind in der vorliegenden Fig. 1 der zentrale Verteilerturm 24 mit nur zwei horizontal mündenden Leitungsanschlüssen 27 sowie nur eine Saatleitung 28 von einer Mehrzahl an Saatleitungen 28 abgebildet; in der Praxis sind eine Vielzahl von sternförmig angeordneten Leitungsanschlüssen 27 sowie eine entsprechende Vielzahl an Saatleitungen 28 vorhanden. Der körnertragende Luftstrom 26 wird auf diese Weise im oberen Bereich des Verteilerturms 24 annähernd gleichmäßig auf die vorhandene Anzahl von Leitungsanschlüssen 27 sowie Saatleitungen 28 aufgeteilt. Die Saatleitungen 28 können das mittels des Luftstroms 16 und 26 getragene körnige Gut zu einer Vereinzelungseinheit 30 befördern, welche sich in Nähe eines Ausbringschars 32 (oder Säschars oder Düngerschars) befindet, mit der/denen das Saatgut in den Boden 34 eingebracht wird. Wie erwähnt, ist jede Saatleitung 28 mit einer solchen Vereinzelungseinheit 30 ausgestattet, die normalerweise unmittelbar vor dem jeweiligen in den Boden 34 eingreifenden Ausbring- oder Säschar 32 angeordnet ist. Die Vereinzelungseinheit 30 kann insbesondere ein Gehäuse 31 mit einer kreisbogenförmigen Innenmantelfläche und einer tangential sich daran anschließend und zumindest abschnittsweise leicht gekrümmt verlaufenden Ausgangsleitung umfassen, so dass der körnertragende Luftstrom 26 entlang dieser Kontur geleitet wird.

Die Vereinzelungseinheit 30 weist ein hier nur schematisch angedeutetes rotierendes Vereinzelungsorgan 36 auf, das innerhalb des Gehäuses 31 rotiert und drehend angetrieben, insbesondere elektromotorisch angetrieben ist, und das mit mehreren - hier nicht dargestellten - Öffnungen oder Kammern zur Aufnahme jeweils einzelner Körner des Verteilgutes ausgestattet ist, so dass das körnige Gut auf diese Weise dosiert und vor seiner Abgabe in den Boden 34 präzise vereinzelt werden kann.

Eine solche Vereinzelungseinheit 30 kann insbesondere einen Aufbau und eine Funktionalität aufweisen, wie dies in der EP 2 858 473 B1 offenbart und im Detail beschrieben ist. Zu einer sinnvollen und an dieser Stelle verwendbaren Ausführungsvariante einer solchen Vereinzelungseinheit, die auch als Dosieraggregat für körniges Gut bezeichnet werden kann, sei zudem auf die Offenbarungsinhalte der EP 2 987 395 A1 sowie der EP 2 989 877 A1 verwiesen.

Alle innerhalb der jeweiligen Vereinzelungseinheiten 30 rotierenden Vereinzelungsorgane 36 können wahlweise modifiziert und/oder ausgetauscht werden, bspw. gegen Vereinzelungsorgane 36 mit mehr oder weniger Kammern oder Öffnungen bzw. mit größeren oder kleineren Kammern oder Öffnungen, so dass unterschiedliche Korngrößen und/oder unterschiedliche Kornarten jeweils optimal vereinzelt werden können, was durch die Anpassung der jeweiligen Vereinzelungsorgane 36 erfolgen kann. Die Öffnungen oder Kammern zur Aufnahme jeweils einzelner Körner können sich vorzugsweise am Randbereich des jeweiligen Vereinzelungsorgans 36 befinden. Insbesondere kann jedes Vereinzelungsorgan 36 eine Mehrzahl radial ausgerichteter bzw. positionierter Aufnahmen o. dgl. besitzen.

Das System 10 umfasst außerdem eine hier nur angedeutete Rechner- und Steuereinheit 38, die u.a. die Umdrehungsgeschwindigkeiten der jeweiligen Vereinzelungsorgane 36 regeln oder steuern kann. Die Rechner- und Steuereinheit 38 und das jeweilige in der Vereinzelungseinheit 30 befindliche Vereinzelungsorgan 36 bzw. dessen elektromotorischer Antrieb (hier nicht dargestellt) stehen miteinander in Verbindung, und zwar in dem Sinne, dass sie daten- und steuertechnisch miteinander gekoppelt sind. Zur Eingabe von Informationen kann die Rechner- und Steuereinheit 38 eine Eingabeeinheit umfassen, welche bspw. als Touchscreen o. dgl. für den Benutzer zugängliches Terminal ausgebildet sein kann. Über diese Eingabeeinheit können der Rechner- und Steuereinheit 38 Informationen zu einer Anzahl an Aufnahmen des jeweils verwendeten Vereinzelungsorgans 36 übertragen werden, d.h. die Rechner- und Steuereinheit 38 ist zur Entgegennahme von Informationen zu einer Anzahl an Aufnahmen des jeweiligen in die Einbauposition der Vereinzelungseinheit 30 eingesetzten Vereinzelungsorgans 36 ausgebildet. Die Rechner- und Steuereinheit 38 kann in denkbaren Ausführungsformen Informationen über die Anzahl an Aufnahmen des jeweiligen Vereinzelungsorgans 36 selbst feststellen. Dies kann beispielsweise über die Ermittlung einer Masse des jeweiligen in die Einbauposition eingesetzten Vereinzelungsorgans 36 erfolgen. Auf der Rechner- und Steuereinheit 38 können bspw. Algorithmen hinterlegt sein, womit die Rechner- und Steuereinheit 38 anhand einer ermittelten Masse des jeweils verwendeten Vereinzelungsorgans 36 auf die Anzahl seiner Aufnahmen schließen kann. Alternativ kann die Rechner- und Steuereinheit 38 über die Eingabe des jeweiligen in die Einbauposition eingesetzten Typs des Vereinzelungsorgans 36 die Anzahl an Aufnahmen ableiten.

Die Rechner- und Steuereinheit 38 und der elektromotorische Antrieb des jeweiligen Vereinzelungsorgans 36 stehen miteinander in Verbindung, so dass die Drehfrequenz des jeweiligen Vereinzelungsorgans 36 über die Rechner- und Steuereinheit 38 unter Berücksichtigung der verfügbaren Informationen selbstständig regelbar ist. Zu diesen Informationen gehört außerdem die jeweilige Fahrgeschwindigkeit der Sämaschine 11. Die Rechner- und Steuereinheit 38 kann anhand der bekannten Anzahl an Aufnahmen des jeweiligen in die Einbauposition eingesetzten Vereinzelungsorgans 36 und anhand der Umdrehungsgeschwindigkeit des Vereinzelungsorgans 36 sowie der Fahrgeschwindigkeit der Sämaschine 11 auf eine Anzahl an dosierten Körnern je Umdrehung des Organs 36 und damit je Fläche des überstrichenen Bodens 34 schließen.

In diesem Zusammenhang kann außerdem eine Drehzahl der Dosiereinheit 14 in Abhängigkeit von einer jeweils vorgegebenen Anzahl an je Flächeneinheit auszubringenden Körnern variiert, d.h. verringert oder erhöht werden. Beim vorliegenden Verfahren müssen die ausgebrachten Körner nicht direkt erfasst werden, was aufgrund der im bekannten Stand der Technik eingesetzten Sensorik zwar möglich wäre, aber aufwendig und fehlerträchtig ist. Es wird vielmehr auf Basis der bekannten Maschinenparameter ein sehr genauer Wert für die insgesamt innerhalb einer definierten Zeit ausgebrachten Körner errechnet, was aufgrund der bekannten Drehzahlen der Vereinzelungsorgane 36 der Vereinzelungseinheiten 30 sowie der bekannten Geometrien hinsichtlich der über den Umfang verteilten Öffnungen oder Kammern problemlos möglich ist. Aus der Anzahl der Öffnungen oder Kammern und der jeweils verwendeten Umdrehungszahlen der rotierenden Vereinzelungsorgane 36 und aus der Anzahl der Säschare 32 sowie deren Abständen voreinander (Reihenweiten) und unter zusätzlicher Berücksichtigung der aktuell gefahrenen Geschwindigkeiten der Sämaschine 11 kann unmittelbar auf die je Flächeneinheit des Bodens 34 ausgebrachten Körner geschlossen bzw. diese je Flächeneinheit (z.B. je Hektar) ausgebrachten Körner vergleichsweise genau berechnet werden. Auf dieser Basis kann schließlich die Drehzahl der dem Speicher 12 zugeordneten Dosiereinheit 14 in Abhängigkeit von einer jeweils vorgegebenen Anzahl an je Flächeneinheit auszubringenden Körnern variiert, d.h. verringert oder erhöht werden, wobei notwendigerweise zusätzlich die jeweilige Fahrgeschwindigkeit - ob konstant oder variabel - mit berücksichtigt wird, da ansonsten die jeweiligen Werte für die je Flächeneinheit auszubringenden Körner nicht ausreichend genau eingehalten werden können.

Die Rechner- und Steuereinheit 38 kann wahlweise zusätzlich oder alternativ eine elektrische Stromaufnahme des elektrischen Antriebsmotors des jeweiligen Vereinzelungsorgans 36 erfassen und verarbeiten und kann hieraus in Abhängigkeit der elektrischen Stromaufnahme die Drehfrequenz des Dosieraggregats 14 beeinflussen. D.h. die Vereinzelungsorgane 36 können die Regelung des Dosieraggregats 14 beeinflussen.

Der Rechner- und Steuereinheit 38 können über die Eingabeeinheit Angaben zu einer auszubringenden Soll-Anzahl an Körnern in Abhängigkeit einer von dem System 10 zurückgelegten Wegstrecke zugeführt werden. Die Rechner- und Steuereinheit 38 kann die Informationen über die Anzahl an Aufnahmen der Vereinzelungsorgane 36 zusammen mit der Angabe über die Soll-Anzahl an auszubringenden Körnern auswerten und eine Drehfrequenz des Vereinzelungsorgans 36 hierbei festsetzen. Mittels dieser Drehfrequenz kann die durch den Bediener vorgegebene Soll-Anzahl an auszubringenden Körnern während der Feldfahrt pro Flächeneinheit erreicht werden. Denkbar wäre auch, dass während einer Feldfahrt die Soll-Anzahl an auszubringenden Körnern durch Eingabe von Informationen in die Eingabeeinheit erhöht bzw. gesenkt wird, wobei die Rechner- und Steuereinheit 38 automatisch die Drehfrequenz an diese Angaben anpassen kann.

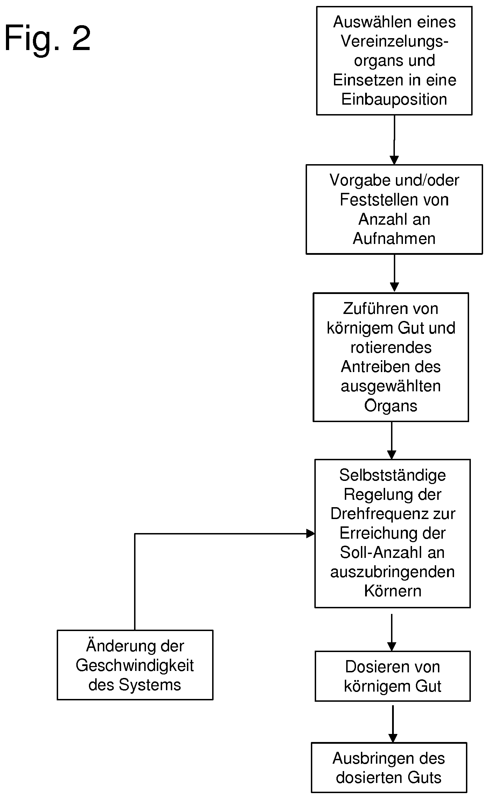

Das schematische Flussdiagramm der Fig. 2 dient der Verdeutlichung der einzelnen Verfahrensschritte einer Ausführungsform des erfindungsgemäßen Verfahrens zum Dosieren und Ausbringen von körnigem Gut, insbesondere von Saatgut, Dünger oder dergleichen. Zunächst wählt ein Bediener in einem ersten Schritt des Verfahrens ein Vereinzelungsorgan 36 aus mindestens zwei unterschiedlichen Bauformen, vorzugsweise aus einer Vielzahl von verschiedenen Vereinzelungsorganen 36, aus. Die mindestens zwei Vereinzelungsorgane 36 unterscheiden sich jeweils durch eine unterschiedliche Anzahl an Aufnahmen, welche zum Dosieren des körnigen Guts vorgesehen sind. Die Aufnahmen können sich auch in ihrer Größe unterscheiden, da je nach Saatgut größere oder kleinere Körner zu dosieren sind. Nach Auswahl des Vereinzelungsorgans 36 wird dieses in eine Einbauposition im Gehäuse 31 einer Vereinzelungseinheit 30 (siehe Fig. 1) eingesetzt. Gleiches passiert mit den übrigen Vereinzelungseinheiten 30, die Teil des Systems 10 bzw. der Sämaschine 11 sind.

Zur Einstellung der Drehfrequenz des rotierenden Vereinzelungsorgans 36 benötigt die Rechner- und Steuereinheit 38 Informationen zu einer Anzahl an Aufnahmen des jeweiligen in die Einbauposition eingesetzten Vereinzelungsorgans 36. Die Informationen zu einer Anzahl an Aufnahmen des jeweiligen ausgewählten Organs 36 gibt ein Anwender über eine Eingabeeinheit vor. Hierbei ist vorgesehen, dass der Anwender oder Benutzer den Typ des jeweiligen in die Einbauposition einzusetzenden Vereinzelungsorgans 36 vorgibt und die Rechner- und Steuereinheit 38 unter Berücksichtigung des Typs Rückschlüsse zur jeweiligen Anzahl an Aufnahmen des in die Einbauposition einzusetzenden Organs 36 ableitet.

Über die Anzahl an Aufnahmen des jeweiligen in die Einbauposition eingesetzten Vereinzelungsorgans 36 kann die Rechner- und Steuereinheit 38 auf die Ist-Anzahl an dosierten Körnern je vollständiger Umdrehung des Vereinzelungsorgans 36 schließen und ableiten, welche Drehfrequenz zur Erreichung einer Soll-Anzahl an auszubringenden Körnern bei einer definierten Fahrtgeschwindigkeit erforderlich ist.

Der Benutzer kann über die Eingabeeinheit eine Soll-Anzahl an auszubringenden Körnern in Abhängigkeit einer von dem System 10 zurückgelegten Wegstrecke vorgeben. Die Rechner- und Steuereinheit 38 kann die Informationen zur Anzahl der Aufnahmen und die Informationen zur Soll-Anzahl an auszubringenden Körnern während einer Feldfahrt auswerten und zum Erreichen der Soll-Anzahl in Abhängigkeit der jeweiligen Geschwindigkeit des Systems 10 (vgl. Fig. 1) während einer Feldfahrt eine Drehfrequenz des in die Einbauposition eingesetzten Vereinzelungsorgans 36 regeln.

Die Rechner- und Steuereinheit 38 verarbeitet zudem optional eine elektrische Stromaufnahme eines elektrischen Antriebsmotors des jeweiligen in die Einbauposition eingesetzten Vereinzelungsorgans 36 und kann in Abhängigkeit davon eine Drehfrequenz des Dosieraggregats 14 beeinflussen bzw. regeln. Damit kann die Drehfrequenz des Dosieraggregats 14 über die zumindest eine elektrische Stromaufnahme des jeweiligen in die Einbauposition eingesetzten Vereinzelungsorgans 36 geregelt werden, um damit den Füllgrad der Vereinzelungseinheiten 30 zu beeinflussen bzw. zu regeln.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: System, Steuerungssystem
- 11: landwirtschaftliche Verteilmaschine, Sämaschine
- 12: Speicher, Speicherbehälter
- 14: Dosiereinheit
- 16: Luftstrom
- 18: Gebläse, Radialgebläse
- 20: Luftleitung
- 22: Steigrohr
- 24: Zentraler Verteiler, Verteilerturm, zentraler Verteilerturm
- 26: körnertragender Luftstrom
- 27: Leitungsanschluss (am zentralen Verteilerturm)
- 28: Saatleitung
- 30: Vereinzelungseinheit
- 31: Gehäuse
- 32: Ausbringschar, Säschar
- 34: Boden
- 36: Vereinzelungsorgan
- 38: Rechner- und Steuereinheit

## Patentansprüche

1. Verfahren zur Steuerung einer landwirtschaftlichen Verteilmaschine (11) zur Verteilung von granulatartigem Verteilgut wie Saatgut, Dünger oder dergl., wobei das Verfahren zumindest die folgenden Schritte umfasst:
• rotatorisches Antreiben wenigstens einer Dosiereinheit (14), die aus einem Saatgutbehälter (12) granulatartiges Verteilgut volumetrisch in einen Luftvolumenstrom (16, 26) dosiert, wobei die Menge an Verteilgut, das in den Luftvolumenstrom (16, 26) dosiert wird, mittels einer Variation einer Rotationsdrehzahl der Dosiereinheit (14) variiert werden kann,
• Befördern des körnigen Verteilgutes von der wenigstens einen Dosiereinheit (14) über wenigstens eine Verteilstelle zu einer Mehrzahl von Saatleitungen (28), die jeweils in Vereinzelungseinheiten (30) der landwirtschaftlichen Verteilmaschine (11) münden,
• Vereinzeln des jeweils in den Saatleitungen (28) beförderten körnigen Verteilgutes vor der Abgabe in den Boden (34) mittels der, in Förderrichtung des Verteilgutes und/oder in Strömungsrichtung des Luftvolumenstroms (16, 26) gesehen, jeweils stromabwärts der mindestens einen Verteilstelle innerhalb der jeweiligen Saatleitungen (28) angeordneten Vereinzelungseinheiten (30), die jeweils ein Gehäuse (31) und ein darin rotierendes Vereinzelungsorgan (36) mit Öffnungen oder Kammern oder Fingern zur Aufnahme jeweils einzelner Körner des Verteilgutes aufweisen,
• vereinzelte Abgabe des körnigen Verteilgutes in den Boden (34) mittels, in Förderrichtung des Verteilgutes und/oder in Strömungsrichtung des Luftvolumenstroms (16, 26) gesehen, jeweils stromabwärts der Vereinzelungseinheiten (30) angeordneter Ausbringschare (32),
**dadurch gekennzeichnet, dass** in Abhängigkeit von einer Anzahl an Öffnungen oder Kammern oder Finger sowie der variablen Drehzahl der rotierenden Vereinzelungsorgane (36) der jeweiligen Vereinzelungseinheiten (30) eine Anzahl von je Flächeneinheit ausgebrachten Körnern ermittelt wird.

2. Verfahren nach Anspruch 1, bei dem eine Drehzahl der wenigstens einen Dosiereinheit (14) in Abhängigkeit von der ermittelten Anzahl und/oder in Abhängigkeit von einer jeweils vorgegebenen Anzahl an je Flächeneinheit auszubringenden Körnern variiert wird.

3. Verfahren nach Anspruch 1 oder 2, bei dem die landwirtschaftliche Verteilmaschine (11) mit einer Mehrzahl an Vereinzelungseinheiten (30) ausgestattet ist, deren Anzahl der von der mindestens einen Verteilstelle mündenden Anzahl an Saatleitungen (28) entspricht, wobei im Gehäuse (31) jeder Vereinzelungseinheit (30) ein Öffnungen oder Kammern oder Finger aufweisendes Vereinzelungsorgan (36) rotiert, und wobei jeweils in Abhängigkeit von der Drehzahl des im Gehäuse (31) der Vereinzelungseinheit (30) rotierenden Vereinzelungsorgans (36) und dessen Anzahl an Öffnungen oder Kammern oder Fingern zur vereinzelten Aufnahme von Körnern eine Gesamtzahl an je Flächeneinheit ausgebrachten Körnern ermittelt wird, und wobei in Abhängigkeit dieser Gesamtzahl an ausgebrachten Körnern sowie entsprechend einer Vorgabe an je Flächeneinheit auszubringenden Körnern eine Drehzahl der mindestens einen Dosiereinheit (14) variiert wird.

4. Verfahren nach einem der Ansprüche 1 bis 3, bei dem in Abhängigkeit von der Anzahl an Vereinzelungseinheiten (30) mit jeweils darin rotierenden Vereinzelungsorganen (36) sowie in Abhängigkeit von der Drehzahl und der Anzahl an Öffnungen oder Kammern oder Fingern zur vereinzelten Aufnahme von Körnern der Anzahl der rotierenden Vereinzelungsorgane (36) eine Gesamtzahl an je Flächeneinheit ausgebrachten Körnern ermittelt wird, und wobei diese Gesamtzahl mittels einer elektronischen Rechner- und Steuereinheit (38) in eine je Quadratmeter ausgebrachte Anzahl von Körner umgerechnet wird.

5. Verfahren nach einem der Ansprüche 1 bis 4, bei dem eine Auswertung der je Zeiteinheit mit Körnern gefüllten Öffnungen oder Kammern oder Finger der rotierenden Vereinzelungsorgane (36) auf Basis eines ermittelten Füllstandes der jeweiligen Vereinzelungseinheiten (30) erfolgt.

6. Verfahren nach Anspruch 5, bei dem der Füllstand der jeweiligen Vereinzelungseinheiten (30) mittels eines Füllstandsensors und/oder mittels einer Drehmomenterfassung am Antriebsmotor der Vereinzelungseinheit (30) erfasst wird.

7. Steuerungssystem (10) für eine landwirtschaftliche Verteilmaschine (11), die zur Verteilung von granulatartigem Verteilgut wie Saatgut, Dünger oder dergl. vorgesehen und ausgestattet ist, und die zumindest umfasst:
• wenigstens eine Dosiereinheit (14), die mittels eines rotatorisch angetriebenen Dosierelements granulatartiges Verteilgut aus einem Saatgutbehälter (12) volumetrisch in einen Luftvolumenstrom (16, 26) dosiert, wobei die Menge an Verteilgut, das in den Luftvolumenstrom (16, 26) dosiert wird, mittels einer Variation einer Rotationsdrehzahl der Dosiereinheit (14) variierbar ist,
• wenigstens eine, in Förderrichtung des Verteilgutes und/oder in Strömungsrichtung des Luftvolumenstroms (16, 26) gesehen, stromabwärts der wenigstens einen Dosiereinheit (14) angeordnete und mit dieser in fluidischer Verbindung stehende und den Luftvolumenstrom (16, 26) mit dem körnigen Verteilgut aufnehmende Verteilstelle mit einer Mehrzahl von daran angeschlossenen Saatleitungen (28), die jeweils in Vereinzelungseinheiten (30) der landwirtschaftlichen Verteilmaschine (11) münden,
• jeweils, in Förderrichtung des Verteilgutes und/oder in Strömungsrichtung des Luftvolumenstroms (16, 26) gesehen, stromabwärts der mindestens einen Verteilstelle innerhalb der jeweiligen Saatleitungen (28) angeordnete Vereinzelungseinheiten (30), die jeweils ein Gehäuse (31) und ein darin rotierendes Vereinzelungsorgan (36) mit Öffnungen oder Kammern oder Fingern zur Aufnahme jeweils einzelner Körner des Verteilgutes aufweisen, wobei die Vereinzelungseinheiten (30) zum Vereinzeln des jeweils in den Saatleitungen (28) beförderten körnigen Verteilgutes vor der Abgabe in den Boden (34) vorgesehen und ausgestattet sind,
• mindestens eine elektronische Rechner- und Steuereinheit (38), die zur Ermittlung einer Anzahl von je Flächeneinheit ausgebrachten Körnern in Abhängigkeit von einer Anzahl an Öffnungen oder Kammern oder Fingern sowie der variablen Drehzahl der rotierenden Vereinzelungsorgane (36) der jeweiligen Vereinzelungseinheiten (30) vorgesehen und ausgestattet ist, und
• jeweils, in Förderrichtung des Verteilgutes und/oder in Strömungsrichtung des Luftvolumenstroms (16, 26) gesehen, stromabwärts der Vereinzelungseinheiten (30) angeordnete Ausbringschare (32) zur vereinzelten Abgabe des körnigen Verteilgutes in den Boden (34),
wobei durch Vorgabe der elektronischen Rechner- und Steuereinheit (38) eine Drehzahl der wenigstens einen Dosiereinheit (14) in Abhängigkeit von einer jeweils vorgegebenen Anzahl an je Flächeneinheit auszubringenden Körnern variierbar ist.

8. Steuerungssystem nach Anspruch 7, wobei die landwirtschaftliche Verteilmaschine (11) mit einer Mehrzahl an Vereinzelungseinheiten (30) ausgestattet ist, deren Anzahl der von der mindestens einen Verteilstelle mündenden Anzahl an Saatleitungen (28) entspricht, wobei im Gehäuse (31) jeder Vereinzelungseinheit (30) ein Öffnungen oder Kammern oder Finger aufweisendes Vereinzelungsorgan (36) rotiert, und wobei jeweils in Abhängigkeit von der Drehzahl des im Gehäuse (31) der Vereinzelungseinheit (30) rotierenden Vereinzelungsorgans (36) und dessen Anzahl an Öffnungen oder Kammern oder Fingern zur vereinzelten Aufnahme von Körnern eine Gesamtzahl an je Flächeneinheit ausgebrachten Körnern ermittelbar ist, und wobei in Abhängigkeit dieser Gesamtzahl an ausgebrachten Körnern sowie entsprechend einer Vorgabe an je Flächeneinheit auszubringenden Körnern eine Drehzahl der mindestens einen Dosiereinheit (14) variierbar ist.

9. Steuerungssystem nach Anspruch 7 oder 8, wobei in Abhängigkeit von der Anzahl an Vereinzelungseinheiten (30) mit jeweils darin rotierenden Vereinzelungsorganen (36) sowie in Abhängigkeit von der Drehzahl und der Anzahl an Öffnungen oder Kammern oder Fingern zur vereinzelten Aufnahme von Körnern der Anzahl der rotierenden Vereinzelungsorgane (36) eine Gesamtzahl an je Flächeneinheit ausgebrachten Körnern ermittelbar ist, und wobei diese Gesamtzahl mittels der elektronischen Rechner- und Steuereinheit (38) in eine je Quadratmeter ausgebrachte Anzahl von Körner umrechenbar ist.

10. Steuerungssystem nach einem der Ansprüche 7 bis 9, wobei die elektronische Rechner- und Steuereinheit (38) zur Auswertung der je Zeiteinheit mit Körnern gefüllten Öffnungen oder Kammern oder Finger der rotierenden Vereinzelungsorgane (36) auf Basis eines ermittelten Füllstandes der jeweiligen Vereinzelungseinheiten (30) vorgesehen und ausgestattet ist.

11. Steuerungssystem nach Anspruch 10, das mit einem Füllstandssensor zur Erfassung der Füllstände der jeweiligen Vereinzelungseinheiten (30) und/oder mit einer Drehmomenterfassung am Antriebsmotor für die rotierenden Vereinzelungsorgane (36) zur Erfassung der Füllstände der jeweiligen Vereinzelungseinheiten (30) ausgestattet ist.
